# EUROPEAN PATENT SPECIFICATION

(11) **EP 3 472 211 B1**
(45) Date of publication and mention of the grant of the patent: **15.04.2020**
(21) Application number: 17725533.8
(22) Date of filing: 05.05.2017
(51) Int. Cl.: C08F 2/00, B01J 19/00, C08F 2/01, C08F 2/18, C08L 23/04

(54) **METHOD OF CONTROLLING AND SYSTEM FOR MANUFACTURING MULTIMODAL HIGH DENSITY POLYETHYLENE**
VERFAHREN ZUR STEUERUNG UND SYSTEM ZUR HERSTELLUNG VON MULTIMODALEM HOCHDICHTEM POLYETHYLEN
PROCÉDÉ DE COMMANDE ET SYSTÈME DE FABRICATION DE POLYÉTHYLÈNE DE HAUTE DENSITÉ MULTIMODAL

(30) Priority: 17.06.2016 EP 16174901
(43) Date of publication of application: 24.04.2019
(73) Proprietor: SABIC Global Technologies B.V., 4612 PX Bergen op Zoom (NL)
(72) Inventor: VISSCHER, Frans, 6160 GA Geleen (NL); GUZMAN-CARRAZCO, Job, Daniel, 6160 GA Geleen (NL); TAMMADONI, Maryam, 6160 GA Geleen (NL)
(74) Representative: Sabic Intellectual Property Group
(86) International application number: PCT/EP2017/060782
(87) International publication number: WO 2017/215836

(56) References cited:
- WO-A1-2015/197558
- WO-A1-2016/005265
- US-A1- 2014 140 894

## Description

### FIELD OF THE INVENTION

The present invention relates to a method of controlling a process for the manufacturing of multimodal high density polyethylene (HDPE) and a system for the manufacturing of multimodal high density polyethylene (HDPE).

### BACKGROUND

High density polyethylene (HDPE) can be produced in a two stage reactor system, where the first polymerization stage is performed in a first reactor by mixing catalyst, co-catalyst, diluent, ethylene and optionally co-monomer and hydrogen. With the catalyst and co-catalyst, which are normally of the Ziegler-Natta type, polymerization is performed to obtain HDPE particles having a molecular weight distribution with a relatively low weight median. The first polymerization step is performed in a slurry which is cooled and recycled back into the first reactor.

In a second polymerization stage, the slurry from the first reactor can be fed into a second reactor, wherein the relative low median weight HDPE particles from the first stage can be grown by further polymerization according to a molecular weight distribution having a higher weight median. The further polymerization can be performed by feeding and mixing diluent, ethylene and optionally co-monomer and hydrogen to the first slurry from the first stage. The resulting HDPE particles in the second reactor slurry thus obtains a molecular weight distribution having two peaks corresponding to the first median and the second median of the respective stages in the polymerization. Thus the obtained HDPE having a two peaked molecular weight distribution is called bimodal HDPE.

In a third stage, post processing can be performed in a third reactor, wherein an even higher monomer conversion in the slurry can be obtained. The post processing reactor is optional and can alternatively be kept in a stand-by mode.

An example of a process for controlling an ethylene polymerization process is provided in WO2015197558A, wherein cascaded reactors are shown for the production of multimodal HDPE.

When producing HDPE in the three phase (slurry) reactor system as described above, a known obstacle is the formation of polymer chunks (as mentioned in WO 2015177014 A1). Especially the second reactor in which the second stage of the polymerization is performed having the molecular weight distribution with the higher median value is prone to this obstacle. These chunks can lead to damage in rotating machinery within the reactor, and require eventual cleaning and/or maintenance. This cleaning can currently only be done when the system is not producing polymer, because a reactor shut down is needed with standard cleaning procedures.

### SUMMARY

It is an object of this invention to allow cleaning and or repair of the second reactor without shutting down the process of the manufacture of multimodal HDPE.

The object is achieved in a method of controlling a process of manufacturing bimodal high density polyethylene, comprising performing first polymerization to form a first slurry in a first reactor, transferring at least part of the first slurry from the first reactor into a second reactor, performing second polymerization to form a second slurry in the second reactor, transferring at least part of the second slurry from the second reactor to an outlet, maintaining a third reactor in a stand-by mode, monitoring the second polymerization in the second reactor to detect a process upset in the reactor, upon detecting a process upset in reactor interrupting the transfer of at least part of the first slurry from the first reactor into the second reactor, transferring at least part of the first slurry from the first reactor into the third reactor, performing the second stage polymerization in the third reactor.

The first slurry has a HDPE molecular weight distribution with a relatively low weight median, whereas the second slurry has the HDPE with a bimodal molecular weight distribution as described above. The process upset can be a visual inspection, or an anomaly detected by a sensor such as overheating or vibration of a drive for a stirrer incorporated in the second reactor. The controlling of the process can be performed manually or by means of a control system which is arranged for performing the steps of interrupting the transfer of at least part of the first slurry from the first reactor into the second reactor, transferring at least part of the first slurry from the first reactor into the third reactor, performing second polymerization to form the second slurry in the third reactor.

By commissioning the third reactor, the second reactor facing problems can be taken out of operation, and be cleaned and maintained without forcing the system to shut down.
The slurry at the outlet of the system having the bimodal HDPE can be transferred to further stages for cooling the slurry and separating liquid and polymer particles.

In an embodiment, performing the first polymerization to form a first slurry comprises feeding and mixing catalyst, co-catalyst, diluent, ethylene and optionally co-monomer and hydrogen, and cooling and recycling the first slurry. Thus the HDPE polymerization having molecular weight distribution with relatively low weight median is achieved.

In a further embodiment, performing the second polymerization in the second reactor to form a second slurry comprises, feeding and mixing diluent, ethylene and optionally co-monomer and hydrogen to the first slurry and cooling and recycling the second slurry.
Thus the HDPE polymerization having molecular weight distribution with two peaks, i.e. a low and a relatively high weight median is achieved.

In an embodiment, the process further comprises feeding diluent into the second reactor, purging (draining) the second reactor contents to the further process stage, performing maintenance in the second reactor, and bringing the second reactor into stand-by mode.

The contents may be drained to further stages of cooling the slurry and separating liquids from the solid polymer particles in the slurry.

This allows the second reactor to cease performing the second polymerization, and be repaired or allow maintenance, where after the second reactor is put in stand-by mode in order to allow restarting the second polymerization when required.

In an embodiment, the method further comprises monitoring the second polymerization stage in the third reactor for detecting a process upset in the third reactor, upon detecting a process upset in reactor interrupting the transfer of at least part of the first slurry from the first reactor into the third reactor, transferring the at least part of the first slurry from the first reactor into the second reactor, and performing the second polymerization stage to form the second slurry in the second reactor.
This allows the process to be configured back into its original state.

In an embodiment, the process comprises mutually alternating performing second polymerization and stand-by mode between the second reactor and the third reactor.
This allows the second and third reactor to be used alternatingly when required.

In an embodiment, the method further comprises externally recycling the second slurry from the reactor (B, C) during stand-by mode. The recycling can be performed to facilitate heating-up the reactor.

In an embodiment, the method further comprises transferring the second slurry from the second reactor to the third reactor, wherein the third reactor is arranged for post-processing the second slurry after the second polymerization in reactor. This allows a higher ethylene conversion to be achieved.

In an embodiment, the third reactor has a geometry and dimensions equivalent to the second reactor. This allows a seamless switch from using the third reactor instead of the second reactor without any interruption of change in HDPE yield.

In an embodiment, stand-by mode comprises maintaining a temperature in a range between and including 40°C and 95°C. This allows the second or third reactor to become operational promptly.

In an embodiment, the further process stage comprises at least one of a cooling stage and a separation stage. This allows the separation of the HDPE from the second slurry and the recycling of the diluent, ethylene monomer and comonomer.

The object is also achieved in a system for the production of bimodal high density polyethylene (HDPE), the system comprising a first reactor, the first reactor arranged for performing first polymerization to form a first slurry, a second reactor arranged for performing a second polymerization to form a second slurry, a third reactor arranged for maintaining a stand-by mode. The system further comprises a first conduit for transferring at least part of the first slurry from the first reactor into the second reactor. The third reactor is further arranged for performing a second polymerization to form the second slurry. The system further comprises a second conduit for transferring at least part of the first slurry from the first reactor into the third reactor. The system further comprises a process monitor for detecting a process upset in the reactors, first valve means for interrupting transferring at least part of the first slurry from the first reactor into the second reactor, and second valve means for alternatively to the transferring at least part of the first slurry from the first reactor into the second reactor transferring at least part of the first slurry from the first reactor into the third reactor. The system further comprises a control unit arranged for controlling the first valve means and the second valve means, and for controlling the polymerization in the first reactor, controlling the polymerization in the second reactor and in the third reactor. The system further comprises sensor means connected to the control unit, wherein the control unit is arranged for detecting a process upset from data from the sensor means. The control unit is arranged for closing the first valve means and opening the second valve means upon detecting a process upset.

In an embodiment, the control unit is further arranged for controlling the second reactor to stop the second polymerization upon detecting a process upset, and the control unit is further arranged for controlling the third reactor to perform second polymerization upon detecting a process upset.

The invention is also directed to a system for the production of trimodal high density polyethylene wherein the system can be designed according to the described idea as used for the production of bimodal high density polyethylene.

### BRIEF DESCRIPTION OF THE DRAWINGS

The invention will be further elucidated with the drawings set out below.
Fig. 1 shows a schematic overview of a system for the production of bimodal high density polyethylene according to an embodiment of the invention.
Fig. 2 shows a block diagram of a system for the production of bimodal high density polyethylene according to an embodiment of the invention.
Fig. 3 shows a block diagram of a method of controlling a process of manufacturing bimodal high density polyethylene.

### DETAILED DESCRIPTION OF EMBODIMENTS OF THE INVENTION

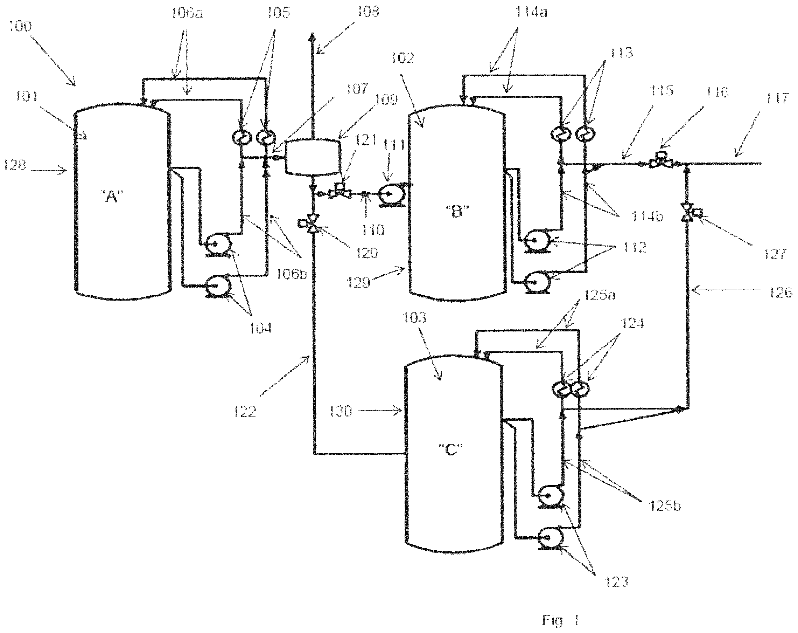

Fig. 1 shows a schematic overview of a system 100 for the production of bimodal high density polyethylene. In a first reactor 'A', ingredients for the first polymerization step are introduced in at least one inlet 128. These ingredients comprise catalyst, co-catalyst, diluent, ethylene and optionally co-monomer and hydrogen. The catalyst can be a Ziegler-Natta type catalyst such as Titanium halides and or alkoxides. The diluent may be hexane or heptane. The ingredients are mixed in the reactor 'A' 101 using for example a stirrer within the reactor vessel, and brought to polymerization, causing polyethylene to be formed around the catalyst particles. The process of polymerization is well known and described for example in the cited prior art WO2015197558A1. The slurry which is formed is pumped round or recycled in a recycle path via conduit 106a, 106b using pumps 104, cooled using at least one cooler 105 and fed back to the reactor 'A' 101. In this process HDPE particles with a relatively low molecular weight distribution are formed, wherein the polyethylene chains are relatively short.

Via flash unit 109 for the removal of volatile gases, the slurry formed in reactor 'A' 101 is transferred via conduit 110 and pump 111 to reactor 'B' 102. The volatile gases leave the system via exhaust 108. In reactor 'B' 102 further ingredients are introduced via at least one inlet 129, comprising diluent, ethylene monomer and optionally co-monomer and hydrogen. These ingredients are mixed with the slurry from the first reactor 'A' 101 using for example a stirrer within the reactor vessel, and further polymerization is performed to form HDPE particles having a relatively high molecular weight distribution compared to the molecular weight distribution of the slurry produced in reactor 'A' 101, due to different reactor conditions. As the slurry from reactor 'A' is mixed with the slurry in reactor 'B' 102, the so called bimodal HDPE is formed having two peaks in the molecular weight distribution.

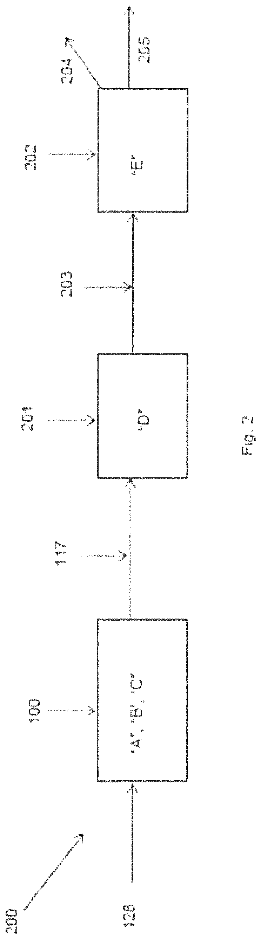

Like the polymerization process in reactor 'A' 101, the slurry formed in reactor 'B' 102 is recycled via a recycle path using conduits 114a, 114b and pumps 112. The slurry is cooled using coolers 113.
The slurry formed in reactor 'B' 102 can be transferred via conduit 115 to outlet 117 for further processing as will be described further below in relation to fig. 2.

A third reactor, reactor 'C' 103 is kept in stand-by mode, which means that it is kept containing some solvent at a temperature in a range between and including 40 to 95° C.

The process in reactor 'B' 102 is monitored for any upset or failure. Sensors can be installed in reactor 'B' 102 to detect lumps forming in the reactor vessel. Alternatively the power consumption of the stirrer drive can be monitored. When lumps are being formed the power consumption of the stirrer drive will increase and may oscillate due to an uneven weight distribution on the stirrer blades. Alternatively the power consumption of the pumps, or vibration of the pumps downstream of reactor 'B' can be monitored. Furthermore other upsets such as reaction temperature and/or pressure may be monitored. As soon as one of these parameters are out of their normal range, a process upset can be detected.

When a process upset is detected in reactor 'B', the reactor can be bypassed via conduit 122 to reactor 'C' 103, allowing slurry from the reactor 'A'101 to flow to reactor 'C' instead of reactor 'B'103. Like reactor 'B'102, reactor 'C'103 is equipped with at least one inlet 130 for feeding further ingredients, comprising diluent, ethylene monomer and optionally co-monomer and hydrogen. These ingredients are mixed with the slurry from the first reactor 'A' 101 as in reactor 'B' 102 using for example a stirrer within the reactor vessel, and further polymerization is performed to form HDPE particles having a relatively high molecular weight distribution.

Like reactor 'B' 102, reactor 'C' is equipped with a recycle path via conduits 125a, 125b, pumps 123 and coolers 124. Via conduit 126 the slurry from the reactor 'C' 103 can be transferred to the outlet 117.

In order to control the bypassing of reactor 'B' 102, valves 120, 121 are in place. In case of a process upset in reactor 'B' 102 valve 121 is closed, which starves the polymerization in reactor 'B' 103. By opening valve 120, slurry from reactor 'A'101 is fed to reactor 'C' 103. Simultaneously the feeding of ethylene, comonomer, etc. is stopped to reactor 'B' and is commenced to reactor 'C'103. The same applies to recycling the slurry in reactor 'B' 102, which is stopped whereas the recycling of the slurry in reactor 'C' 103 is commenced.

After taking reactor 'B' 102 out of production, it may need cleaning.
Part of the cleaning procedure will be to feed fresh diluent to reactor 'B' 102 with the intention to dilute the reactor contents, and sending polymer to the outlet conduit 117.

After diluting it, the reactor 'B' 102 is to be drained. Then it can be filled with fresh diluent, and heated to hot-boiling temperature. After maintaining that temperature for several hours, the reactor contents can be drained (to the sludge section).

The valve 116 is closed when reactor 'B' 102 is taken out of operation to prevent backflow, whereas opening valve 127 ensures that reactor 'C' 103 can produce and deliver slurry to the outlet conduit 117. When reactor 'C' is in stand-by mode, the valve 127 is closed.

In order for the process of HDPE production to be controlled, a control unit (not shown) can process the sensor information, and detect a process upset as described above. The control unit can control the valves 120, 121, 116, 127, as well as the further polymerization in the reactors A, B and C 101 - 103 and the associated recycling of the slurry in the respective reactors A, B, C 101 - 103. The valves 120, 121, 116, 127 can be controlled for example electrically by the control unit.

When reactor 'B' 102 is taken out of production, and reactor 'C'103 is in production mode, reactor "B" 102 can be subjected to maintenance and repair. When the maintenance and/or repair is completed, reactor 'B' can be set in stand-by mode, i.e. maintained containing some diluent at a temperature in a range between and including 40 to 95° C. this way, when a process upset occurs in reactor 'C' 103, the bypass around reactor 'B' 102 can be reversed. In this way the reactors 'B' 102 and 'C' 103 operate as mutual alternatives. This is feasible when reactor 'C'103 has similar monitoring sensors as reactor 'B' 102. Moreover, reactor 'C' 103 can have geometry and dimensions similar to reactor 'B' 102.

Fig. 2 shows a system 200 for the production of bimodal HDPE comprising system 100 of fig. 1 with additional steps 'D' 201 for cooling the slurry from the polymerization process, i.e. from reactor 'B' 102 or reactor 'C', and 'E' 202 connected via conduit 203 for separating liquids and bimodal HDPE particles delivered via outlet 117.

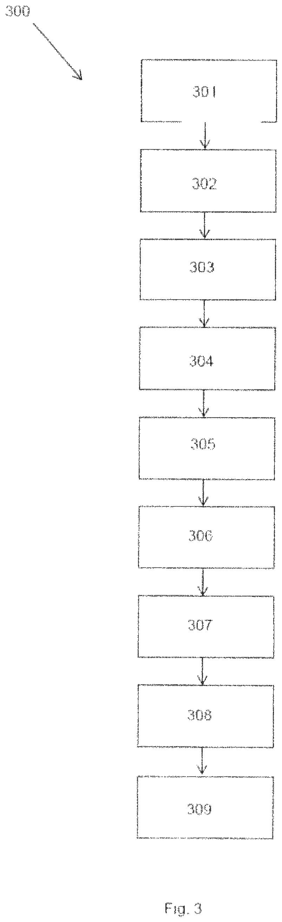

Fig. 3 shows a block diagram of a method 300 of controlling a process of manufacturing bimodal high density polyethylene. While referring to the system described in figures 1 and 2, the method 300, comprises the steps of:
Step 301: performing polymerization to form a first slurry in reactor A 101. The polymerization comprises feeding and mixing ingredients, comprising catalyst, cocatalyst, diluent, ethylene monomer and optionally co-monomer, and hydrogen.
Step 302: transferring at least part of the first slurry from reactor 'A' 101 into reactor 'B' 102
Step 303: performing polymerization to form a slurry in the second reactor 'B' 102. The polymerization comprises feeding and mixing further ingredients, comprising diluent, ethylene monomer and optionally co-monomer and hydrogen.
Step 304: transferring at least part of the slurry from the second reactor 'B' 102 to an outlet 117.
Step 305: maintaining the reactor 'C' 103 in a stand-by mode. The stand-by mode can comprise maintaining the diluent or slurry in the reactor at a temperature in a range between and including 40°C and 95°C.
Step 306: monitoring the polymerization in the reactor B' 102 for detecting a process upset in reactor 'B' 102;
Step 307: upon detecting a process upset in reactor 'B' 102 interrupting the transfer of at least part of the first slurry from the reactor 'A' 101 into the second reactor 'B' 102, and subsequently performing :
   Step 308: transferring at least part of the first slurry from the reactor 'A' 101 into the reactor 'C' 103, and:
   Step 309: performing polymerization to form the second slurry in the reactor 'C' 103.

The embodiments described above are given by way of example only. Variations to these examples may be envisioned without departing from the scope of the claims set out below.

## Claims

1. Method of controlling a process of manufacturing multimodal high density polyethylene, comprising
• performing first polymerization step (I) to form a first slurry in a first reactor (A);
• transferring at least part of the first slurry from the first reactor (A) into a second reactor (B);
• performing second polymerization step (II) to form a second slurry in the second reactor (B);
• transferring at least part of the second slurry from the second reactor (B) to an outlet (117);
• maintaining the diluent or slurry in a third reactor (C) in a stand-by mode (III);
• monitoring the second polymerization (II) in the second reactor (B) to detect a process upset in reactor (B);
• upon detecting a process upset in reactor (B) interrupting the transfer of at least part of the first slurry from the first reactor (A) into the second reactor (B);
• transferring at least part of the first slurry from the first reactor (A) into the third reactor (C);
• performing second polymerization (II) to form the second slurry in the third reactor (C).

2. Method according to claim 1, wherein performing the first polymerization (I) to form a first slurry comprises
• feeding and mixing catalyst, co-catalyst, diluent, ethylene and optionally co-monomer and hydrogen;
• cooling and recycling the first slurry.

3. Method according to claim 1 or claim 2, wherein performing the second polymerization (II) in the second reactor (B) to form a second slurry comprises,
• feeding and mixing diluent, ethylene and optionally co-monomer and hydrogen to the first slurry;
• cooling and recycling the second slurry.

4. Method according to any of the preceding claims, further comprising
• feeding diluent into the second reactor (B);
• purging (draining) the second reactor (B) contents to further process stage (D, E) for cooling of the slurry and separating gases and polymer particles from the slurry;
• performing maintenance in the second reactor (B);
• bringing the second reactor (B) into stand-by mode.

5. Method according to claim 1, further comprising
• monitoring the second polymerization (II) in the third reactor (C) for detecting a process upset in reactor (C);
• upon detecting a process upset in the third reactor (C) interrupting the transfer of at least part of the first slurry from the first reactor (A) into the third reactor (C);
• transferring at least part of the first slurry from the first reactor (A) into the second reactor (B);
• performing second polymerization step (II) to form the second slurry in the second reactor (B).

6. Method according to claim 5, wherein the second reactor (B) and third reactor (C) mutually alternate between performing second polymerization step (II) and stand-by mode.

7. Method according to any of the preceding claims, further comprising externally recycling the second slurry or diluent from the reactor (B, C) during stand-by mode.

8. Method according to any of the preceding claims, further comprising
• transferring the second slurry from the second reactor (B) to the third reactor (C);
• wherein the third reactor (C) is arranged for post-processing the second slurry after the second polymerization (II) in reactor (B) .

9. Method according to any of the preceding claims, wherein the third reactor (C) has a geometry equivalent to that of the second reactor (B).

10. Method according to any of the preceding claims, wherein stand-by mode comprises maintaining the reactor with at least some diluent at a temperature in a range between and including 40°C and 95°C.

11. Method according to any of the preceding claims, wherein the further process stage (D, E) comprises at least one of a cooling stage (D) and a separation stage (E).

12. System for the production of multimodal high density polyethylene (HDPE), the system comprising:
• a first reactor (A), arranged for performing first polymerization (I) to form a first slurry;
• a second reactor (B) arranged for performing second polymerization (II) to form a second slurry;
• a third reactor (C) arranged for maintaining a steady stand-by mode;
• a first conduit for transferring at least part of the first slurry from the first reactor (A) into the second reactor (B);
**characterized by**
• the third reactor (C) being further arranged for performing second polymerization (II) to form the second slurry;
• a second conduit for transferring at least part of the first slurry from the first reactor (A) into the third reactor (C);
• a process monitor for detecting a process upset in reactor (B);
• first valve means for interrupting transferring at least part of the first slurry from the first reactor (A) into the second reactor (B);
• second valve means for alternatively the transferring at least part of the first slurry from the first reactor (A) into the second reactor (B) transferring at least part of the first slurry from the first reactor (A) into the third reactor (C)
• a control unit arranged for controlling the first valve means and the second valve means, and for controlling the polymerization in the first reactor (A), controlling the polymerization the second reactor (B) and the third reactor (C);
• sensor means connected to the control unit;
• wherein the control unit is arranged for detecting a process upset from data from the sensor means;
• wherein the control unit is arranged for closing the first valve means and opening the second valve means upon detecting a process upset.

13. System according to claim 12, wherein the control unit is further arranged for controlling the second reactor (B) to stop the second polymerization upon detecting a process upset, and wherein the control unit is further arranged for controlling the third reactor to perform second polymerization upon detecting a process upset.

14. Method according to any one of claims 1-11 and system according to any one of claims 12-13 wherein multimodal high density polyethylene is bimodal high density polyethylene.

## Patentansprüche

1. Verfahren zur Steuerung eines Prozesses zur Herstellung von multimodalem Polyethylen hoher Dichte, bei dem man
• einen ersten Polymerisationsschritt (I) zur Bildung einer ersten Aufschlämmung in einem ersten Reaktor (A) durchführt,
• zumindest einen Teil der ersten Aufschlämmung aus dem ersten Reaktor (A) in einen zweiten Reaktor (B) überführt,
• einen zweiten Polymerisationsschritt (II) zur Bildung einer zweiten Aufschlämmung in dem zweiten Reaktor (B) durchführt,
• zumindest einen Teil der zweiten Aufschlämmung aus dem zweiten Reaktor (B) zu einem Auslass (117) überführt,
• das Verdünnungsmittel oder die Aufschlämmung in einem dritten, sich in einem Bereitschaftszustand (III) befindlichen Reaktor (C) hält,
• die zweite Polymerisation (II) in dem zweiten Reaktor (B) zur Feststellung einer Prozessstörung in Reaktor (B) überwacht,
• bei Feststellung einer Prozessstörung in Reaktor (B) das Überführen von zumindest einem Teil der ersten Aufschlämmung aus dem ersten Reaktor (A) in den zweiten Reaktor (B) unterbricht,
• zumindest einen Teil der ersten Aufschlämmung aus dem ersten Reaktor (A) in den dritten Reaktor (C) überführt,
• die zweite Polymerisation (II) zur Bildung einer zweiten Aufschlämmung in dem dritten Reaktor (C) durchführt.

2. Verfahren nach Anspruch 1, bei dem man bei der Durchführung der ersten Polymerisation (I) zur Bildung einer ersten Aufschlämmung
• Katalysator, Cokatalysator, Verdünnungsmittel, Ethylen und gegebenenfalls Comonomer und Wasserstoff zuführt und mischt,
• die erste Aufschlämmung abkühlt und zurückführt.

3. Verfahren nach Anspruch 1 oder Anspruch 2, bei dem man bei der Durchführung der zweiten Polymerisation (II) in dem zweiten Reaktor (B) zur Bildung einer zweiten Aufschlämmung
• der ersten Aufschlämmung Verdünnungsmittel, Ethylen und gegebenenfalls Comonomer und Wasserstoff zuführt und mischt,
• die zweite Aufschlämmung abkühlt und zurückführt.

4. Verfahren nach einem der vorhergehenden Ansprüche, bei dem man ferner
• dem zweiten Reaktor (B) Verdünnungsmittel zuführt,
• den Inhalt des zweiten Reaktors (B) zu weiteren Prozessstufen (D, E) für das Abkühlen der Aufschlämmung und das Abtrennen von Gasen und Polymerteilchen von der Aufschlämmung abführt (ablässt),
• Wartungsarbeiten in dem zweiten Reaktor (B) durchführt,
• den zweiten Reaktor (B) in Bereitschaftszustand versetzt.

5. Verfahren nach Anspruch 1, bei dem man ferner
• die zweite Polymerisation (II) in dem dritten Reaktor (C) zur Feststellung einer Prozessstörung in Reaktor (C) überwacht,
• bei Feststellung einer Prozessstörung in dem dritten Reaktor (C) das Überführen von zumindest einem Teil der ersten Aufschlämmung aus dem ersten Reaktor (A) in den dritten Reaktor (C) unterbricht,
• zumindest einen Teil der ersten Aufschlämmung aus dem ersten Reaktor (A) in den zweiten Reaktor (B) überführt,
• den zweiten Polymerisationsschritt (II) zur Bildung einer zweiten Aufschlämmung in dem zweiten Reaktor (B) durchführt.

6. Verfahren nach Anspruch 5, bei dem der zweite Reaktor (B) und der dritte Reaktor (C) wechselseitig zwischen der Durchführung des zweiten Polymerisationsschritts (II) und Bereitschaftszustand hin- und herwechseln.

7. Verfahren nach einem der vorhergehenden Ansprüche, bei dem man ferner die zweite Aufschlämmung oder das Verdünnungsmittel aus dem Reaktor (B, C) während des Bereitschaftszustands extern zurückführt.

8. Verfahren nach einem der vorhergehenden Ansprüche, bei dem man ferner
• die zweite Aufschlämmung aus dem zweiten Reaktor (B) in den dritten Reaktor (C) überführt,
• wobei der dritte Reaktor (C) für eine Weiterverarbeitung der zweiten Aufschlämmung nach der zweiten Polymerisation (II) in Reaktor (B) ausgelegt ist.

9. Verfahren nach einem der vorhergehenden Ansprüche, bei dem die Geometrie des dritten Reaktors (C) der des zweiten Reaktors (B) entspricht.

10. Verfahren nach einem der vorhergehenden Ansprüche, bei dem der Bereitschaftszustand das Halten des Reaktors mit zumindest etwas Verdünnungsmittel bei einer Temperatur in einem Bereich von 40 °C bis 95 °C umfasst.

11. Verfahren nach einem der vorhergehenden Ansprüche, bei dem die weiteren Prozessstufen (D, E) mindestens eine Abkühlungsstufe (D) und eine Abtrennungstufe (E) umfassen.

12. System zur Herstellung von multimodalem Polyethylen hoher Dichte (HDPE), wobei das System Folgendes umfasst:
• einen ersten Reaktor (A), der zur Durchführung einer ersten Polymerisation (I) zur Bildung einer ersten Aufschlämmung ausgelegt ist,
• einen zweiten Reaktor (B), der zur Durchführung einer zweiten Polymerisation (II) zur Bildung einer zweiten Aufschlämmung ausgelegt ist,
• einen dritten Reaktor (C), der zur Beibehaltung eines ständigen Bereitschaftszustands ausgelegt ist,
• eine erste Leitung zur Überführung von zumindest einem Teil der ersten Aufschlämmung aus dem ersten Reaktor (A) in den zweiten Reaktor (B),
**gekennzeichnet durch**
• weitere Auslegung des dritten Reaktors (C) zur Durchführung einer zweiten Polymerisation (II) zur Bildung einer zweiten Aufschlämmung,
• eine zweite Leitung zur Überführung von zumindest einem Teil der ersten Aufschlämmung aus dem ersten Reaktor (A) in den dritten Reaktor (C),
• eine Prozessüberwachung zur Feststellung einer Prozessstörung in Reaktor (B),
• erste Ventilmittel zur Unterbrechung der Überführung von zumindest einem Teil der ersten Aufschlämmung aus dem ersten Reaktor (A) in den zweiten Reaktor (B),
• zweite Ventilmittel, mit denen man alternativ zur Überführung von zumindest einem Teil der ersten Aufschlämmung aus dem ersten Reaktor (A) in den zweiten Reaktor (B) zumindest einen Teil der ersten Aufschlämmung aus dem ersten Reaktor (A) in den dritten Reaktor (C) überführt,
• eine Steuereinheit, die zur Steuerung der ersten Ventilmittel und der zweiten Ventilmittel und zur Steuerung der Polymerisation in dem ersten Reaktor (A), die die Polymerisation in dem zweiten Reaktor (B) und dem dritten Reaktor (C) steuert, ausgelegt ist,
• mit der Steuereinheit verbundene Sensormittel,
• wobei die Steuereinheit zur Feststellung einer Prozessstörung anhand von Daten aus den Sensormitteln ausgelegt ist,
• wobei die Steuereinheit zum Schließen der ersten Ventilmittel und Öffnen der zweiten Ventilmittel bei Feststellung einer Prozessstörung ausgelegt ist.

13. System nach Anspruch 12, wobei die Steuereinheit ferner zur Steuerung des zweiten Reaktors (B) derart ausgelegt ist, dass die zweite Polymerisation bei Feststellung einer Prozessstörung angehalten wird, und wobei die Steuereinheit ferner zur Steuerung des dritten Reaktors (C) derart ausgelegt ist, dass die zweite Polymerisation bei Feststellung einer Prozessstörung durchgeführt wird.

14. Verfahren nach einem der Ansprüche 1-11 und System nach einem der Ansprüche 12-13, wobei es sich bei dem multimodalen Polyethylen hoher Dichte um bimodales Polyethylen hoher Dichte handelt.

## Revendications

1. Procédé de commande d'un procédé de fabrication de polyéthylène de haute densité multimodal, comprenant :
• la réalisation d'une première étape de polymérisation (I) pour former une première suspension dans un premier réacteur (A) ;
• le transfert d'au moins une partie de la première suspension du premier réacteur (A) à un deuxième réacteur (B) ;
• la réalisation d'une deuxième étape de polymérisation (II) pour former une deuxième suspension dans le deuxième réacteur (B) ;
• le transfert d'au moins une partie de la deuxième suspension du deuxième réacteur (B) à une sortie (117) ;
• le maintien du diluant ou de la suspension dans un troisième réacteur (C) en mode veille (III) ;
• la surveillance de la deuxième polymérisation (II) dans le deuxième réacteur (B) pour détecter une perturbation du procédé dans le réacteur (B) ;
• lorsqu'une perturbation du procédé est détectée dans le réacteur (B), l'interruption du transfert d'au moins une partie de la première suspension du premier réacteur (A) au deuxième réacteur (B) ;
• le transfert d'au moins une partie de la première suspension du premier réacteur (A) au troisième réacteur (C) ;
• la réalisation d'une deuxième polymérisation (II) pour former la deuxième suspension dans le troisième réacteur (C).

2. Procédé selon la revendication 1, dans lequel la réalisation de la première polymérisation (I) pour former une première suspension comprend :
• l'introduction et le mélange d'un catalyseur, d'un cocatalyseur, d'un diluant, d'éthylène et optionnellement d'un comonomère et d'hydrogène ;
• le refroidissement et le recyclage de la première suspension.

3. Procédé selon la revendication 1 ou la revendication 2, dans lequel la réalisation de la deuxième polymérisation (II) dans le deuxième réacteur (B) pour former une deuxième suspension comprend :
• l'introduction et le mélange d'un diluant, d'éthylène et optionnellement d'un comonomère et d'hydrogène dans la première suspension ;
• le refroidissement et le recyclage de la deuxième suspension.

4. Procédé selon l'une quelconque des revendications précédentes, comprenant en outre :
• l'introduction d'un diluant dans le deuxième réacteur (B) ;
• la purge (vidange) du contenu du deuxième réacteur (B) dans une étape supplémentaire de procédé (D, E) pour le refroidissement de la suspension et la séparation de gaz et de particules de polymère de la suspension ;
• la réalisation d'une maintenance dans le deuxième réacteur (B) ;
• la mise du deuxième réacteur (B) en mode veille.

5. Procédé selon la revendication 1, comprenant en outre :
• la surveillance de la deuxième polymérisation (II) dans le troisième réacteur (C) pour détecter une perturbation du procédé dans le réacteur (C) ;
• lorsqu'une perturbation du procédé est détectée dans le troisième réacteur (C), l'interruption du transfert d'au moins une partie de la première suspension du premier réacteur (A) au troisième réacteur (C) ;
• le transfert d'au moins une partie de la première suspension du premier réacteur (A) au deuxième réacteur (B) ;
• la réalisation d'une deuxième étape de polymérisation (II) pour former la deuxième suspension dans le deuxième réacteur (B).

6. Procédé selon la revendication 5, dans lequel le deuxième réacteur (B) et le troisième réacteur (C) alternent mutuellement entre la réalisation de la deuxième étape de polymérisation (II) et le mode veille.

7. Procédé selon l'une quelconque des revendications précédentes, comprenant en outre un recyclage externe de la deuxième suspension ou du diluant en provenance du réacteur (B, C) durant le mode veille.

8. Procédé selon l'une quelconque des revendications précédentes, comprenant en outre :
• le transfert de la deuxième suspension du deuxième réacteur (B) au troisième réacteur (C) ;
• dans lequel le troisième réacteur (C) est agencé pour un post-traitement de la deuxième suspension après la deuxième polymérisation (II) dans le réacteur (B).

9. Procédé selon l'une quelconque des revendications précédentes, dans lequel le troisième réacteur (C) a une géométrie équivalente à celle du deuxième réacteur (B).

10. Procédé selon l'une quelconque des revendications précédentes, dans lequel le mode veille comprend un maintien du réacteur avec au moins une partie de diluant à une température dans une plage comprise entre 40 °C et 95 °C, inclus.

11. Procédé selon l'une quelconque des revendications précédentes, dans lequel l'étape supplémentaire de procédé (D, E) comprend l'un d'une étape de refroidissement (D) et d'une étape de séparation (E) .

12. Système pour la production de polyéthylène de haute densité multimodal (HDPE), le système comprenant :
• un premier réacteur (A), agencé pour la réalisation d'une première polymérisation (I) pour former une première suspension ;
• un deuxième réacteur (B), agencé pour la réalisation d'une deuxième polymérisation (II) pour former une deuxième suspension ;
• un troisième réacteur (C), agencé pour le maintien d'un mode veille stable ;
• un premier conduit pour le transfert d'au moins une partie de la première suspension du premier réacteur (A) au deuxième réacteur (B) ;
**caractérisé par** :
• **le fait que** le troisième réacteur (C) est agencé en outre pour la réalisation d'une deuxième polymérisation (II) pour former la deuxième suspension ;
• un deuxième conduit pour le transfert d'au moins une partie de la première suspension du premier réacteur (A) au troisième réacteur (C) ;
• un moniteur de procédé pour détecter une perturbation du procédé dans le réacteur (B) ;
• un premier moyen sous forme de valve pour l'interruption du transfert d'au moins une partie de la première suspension du premier réacteur (A) au deuxième réacteur (B) ;
• un deuxième moyen sous forme de valve pour réaliser alternativement un transfert d'au moins une partie de la première suspension du premier réacteur (A) au deuxième réacteur (B) et un transfert d'au moins une partie de la première suspension du premier réacteur (A) au troisième réacteur (C) ;
• une unité de commande agencée pour commander le premier moyen sous forme de valve et le deuxième moyen sous forme de valve, et pour commander la polymérisation dans le premier réacteur (A), et commander la polymérisation du deuxième réacteur (B) et du troisième réacteur (C) ;
• un moyen sous forme de capteur connecté à l'unité de commande ;
• dans lequel l'unité de commande est agencée pour détecter une perturbation du procédé à partir de données en provenance du moyen sous forme de capteur ;
• dans lequel l'unité de commande est agencée pour la fermeture du premier moyen sous forme de valve et l'ouverture du deuxième moyen sous forme de valve lorsqu'une perturbation du procédé est détectée.

13. Système selon la revendication 12, dans lequel l'unité de commande est agencée en outre pour commander le deuxième réacteur (B) pour faire cesser la deuxième polymérisation lorsqu'une perturbation du procédé est détectée, et dans lequel l'unité de commande est agencée en outre pour commander le troisième réacteur pour réaliser une deuxième polymérisation lorsqu'une perturbation du procédé est détectée.

14. Procédé selon l'une quelconque des revendications 1 à 11 et système selon l'une quelconque des revendications 12 et 13, dans lequel le polyéthylène de haute densité multimodal est un polyéthylène de haute densité bimodal.
